# EUROPÄISCHE PATENTSCHRIFT

(11) **EP 0 469 392 B1**
(45) Veröffentlichungstag und Bekanntmachung des Hinweises auf die Patenterteilung: **16.03.1994**
(21) Anmeldenummer: 91111956.8
(22) Anmeldetag: 17.07.1991
(51) Int. Cl.: D21C 7/12

(54) **Vorrichtung zur diskontinuierlichen Entnahme einer Zellstoffprobe aus einem Zellstoffkocher**
Apparatus for discontinuously extracting a cellulosic sample out of a digester
Dispositif pour extraire de façon discontinue un échantillon de pâte d'un lessiveur

(30) Priorität: 19.07.1990 DE 9010794 U
(43) Veröffentlichungstag der Anmeldung: 05.02.1992
(73) Patentinhaber: SIEMENS AKTIENGESELLSCHAFT, 80333 München (DE)
(72) Erfinder: Furumoto, Herbert, Dr., W-8520 Erlangen (DE); Marques, Olivera, Dipl.-Ing., P-4000 Porto (PT)

(56) Entgegenhaltungen:
- EP-A- 0 336 234
- US-A- 4 540 468

## Beschreibung

Die Erfindung betrifft eine Vorrichtung zur Gewinnung einer Zellstoffprobe aus einem Zellstoffkocher.

Die Kochung von zerkleinertem, insbesondere gehacktem oder gemahlenem Holz, Bagasse, Stroh oder anderen entsprechenden Rohstoffen zur Erzeugung von Zellstoff stellt in der Regel einen diskontinuierlichen, verfahrenstechnischen Prozeß dar. Hierzu wird ein chemischer Reaktor mit einer Charge aus Hackschnitzeln und Aufschlußchemikalien gefüllt, geschlossen und anschließend beheizt. Zur eigentlichen Kochung werden im Inneren des Kochers Drücke von beispielsweise 8 bar und Temperaturen von beispielsweise 130° C benötigt. Aufgrund derartiger Prozeßparameter stellt die Zellstoffkochung einen in der Regel von außen nicht oder nur schwer zugänglichen, geschlossenen verfahrenstechnischen Prozeß dar. Insbesondere ist es nicht ohne weiteres möglich, den im Verlauf einer Kochung erzielten Fortschritt in der Umwandlung von Holz in Zellstoff zu beobachten. Es ist somit besonders schwierig, den optimalen Endzeitpunkt zum Abbruch der Kochung zu bestimmen bzw. zumindest zu extrapolieren.

Wird eine Kochung beendet, so liegt nach dem Herunterfahren des Kochers, d.h. dem Abbau von Druck und Temperatur, unveränderlich die Zellstoffqualität für die jeweilige Charge fest. Wird die Kochung zu früh abgebrochen, so wird ein nur unvollständiger Aufschluß des Holzes und somit eine geringere Zellstoffquantität und -qualität erreicht. Ein Wiederverschließen und erneutes Hochfahren des Kochers zum Zwecke einer Nachkochung scheidet in aller Regel aus wirtschaftlichen Gründen aus. Wurde andererseits eine Kochung zu spät beendet, so muß ebenfalls mit Einbußen in der Zellstoffquantität und -qualität gerechnet werden. Bei einer derartigen zu langen Kochung, d.h. einer Überkochung, ist eine mit der Dauer der Kochzeitüberschreitung zunehmende Beschädigung bzw. Zerstörung des Zellstoffes zu beobachten.

Insbesondere bei geschlossenen, diskontinuierlichen Kochern ist es somit nach deren Beladung mit Holzschnitzeln und Aufschlußchemikalien, deren Verschluß und dem Start der Kochung notwendig, das voraussichtliche Ende der Kochung möglichst genau zu extrapolieren, im Verlauf der Kochung zu überwachen und gegebenenfalls zu korrigieren. Eine besonders vorteilhafte Möglichkeit zur optimalen Bestimmung der benötigten Kochzeit besteht darin, eine Zellstoffprobe aus dem Kocher in einem Zeitpunkt zu entnehmen, bei dem der Kochprozeß zwar schon erheblich fortgeschritten, aber mit Sicherheit noch nicht abgeschlossen ist. Die Stoffprobe kann dann extern analysiert werden. Hiermit ist eine sichere Aussage über den momentan im Kocher vorliegenden Aufschlußgrad und die bis zum Erreichen des gewünschten Aufschlußgrades bei der dann gewünschten Zellstoffqualität noch benötigte Kochzeit möglich. In der Regel wird die sogenannte "Kappazahl" ermittelt, welche ein bekanntes Maß für die jeweils vorliegende Zellstoffqualität darstellt.

Die Entnahme einer Stoffprobe aus einem geschlossenen Zellstoffkocher wird durch die darin vorherrschenden Prozeßbedingungen erheblich erschwert. So müssen bei einer Probenentnahme sowohl der relativ hohe Innendruck als auch die hohe Innentemperatur sicher bis auf Umgebungsbedingungen abgebaut werden. Die Kombination aus hohem Druck und hoher Temperatur stellt bei der Probenentnahme eine besondere Gefahr insbesondere für das den Zellstoffkocher bedienende Personal dar. Ein weiteres Problem besteht darin, daß nicht einfach eine gewisse Menge Zellstoff aus dem Kocher abgezogen werden kann, sondern eine sogenannte "repräsentative Probe" entnommen werden muß. Hierbei handelt es sich um eine Probe, welche die momentan im Mittel im Inneren des Kochers vorliegenden Aufschlußbedingungen mit ausreichender Genauigkeit wiedergibt. Bei Zellstoffkochern ist zu beobachten, daß sich die hydrodynamischen Verhältnisse vom Kocherinneren zur Kocherwandung hin verschlechter. Dies hat seine Ursache insbesondere darin, daß die Kocherwandung eine thermische Senke darstellt, und zudem die innere Zirkulation und Durchmengung des Zellstoffbreies im Bereich der Wandungen geringer ist. Die in direktem Kontakt mit der Wandung bzw. in unmittelbarer Nähe davon befindlichen Teile einer Charge sind somit erheblich schlechteren Aufschlußbedingungen ausgesetzt als der Großteil der Hackschnitzelmasse im Inneren des Kochers. Beim einfachen Ablassen einer Stoffprobe an irgendeiner Stelle des Zellstoffkochers würde somit ein erheblicher Teil der Probe aus Zellstoff bestehen, welcher von den benachteiligten Wandbereichen abgezogen worden wäre. Hiermit ist es nicht möglich, eine für die jeweils im Inneren des Kochers vorliegenden Reaktionsbedingungen repräsentative Probe mit geringem Aufwand zu entnehmen. Die Probenqualität kann in diesem Fall beispielsweise nur dadurch erhöht werden, daß an der Probenentnahmestelle zunächst eine große Menge des Kocherinhaltes frei entnommen und abgeleitet wird, und aus diesem Ablaßstrom erst nach Ablauf einer gewissen Zeit die eigentliche Stoffprobe abgezweigt wird. Ein derartiges Vorgehen ist unwirtschaftlich, da zur exakten, optimalen Bestimmung des Endzeitpunktes der Kochung unter Umständen mehrere Proben entnommen werden müssen, und bei jeder Probenentnahme größere Mengen des Kocherinhaltes verloren gehen würden.

Der Erfindung liegt die Aufgabe zugrunde, eine Vorrichtung zur Gewinnung einer Probe aus einem Zellstoffkocher anzugeben, welche die obengenannten Nachteile nicht aufweist. Zum einen soll mit minimalen Verlusten an Chargenvolumen eine für die momentanen Reaktionsbedingungen im Inneren des Kochers "repräsentative Probe" entnommen werden können. Zum anderen soll durch Abbau des hohen Druckes und der hohen Temperatur des entnommenen Zellstoffes auf Umgebungsbedingungen eine "entspannte Probe" entnommen werden können.

Die Aufgabe wird gelöst mit einer Vorrichtung gemäß Anspruch 1. Vorteilhafte Ausführungsformen der Erfindung sind in den Unteransprüchen enthalten.

Die Erfindung wird desweiteren an Hand von zwei, in den beiden Figuren dargestellten Ausführungsbeispielen näher erläutert. Dabei zeigt:
- FIG 1: eine erste Ausführungsform für eine gemäß der Erfindung aufgebaute Vorrichtung, und
- FIG 2: eine zweite, besonders vorteilhafte Ausführungsform, welche insbesondere über zusätzliche Mittel zum Aufschlagen und Portionieren der Zellstoffprobe verfügt.

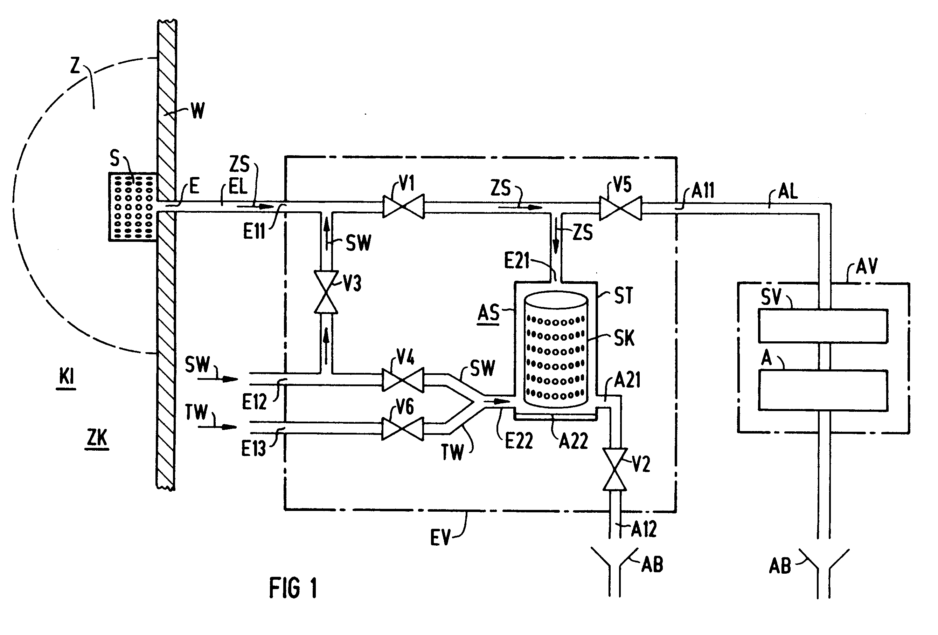

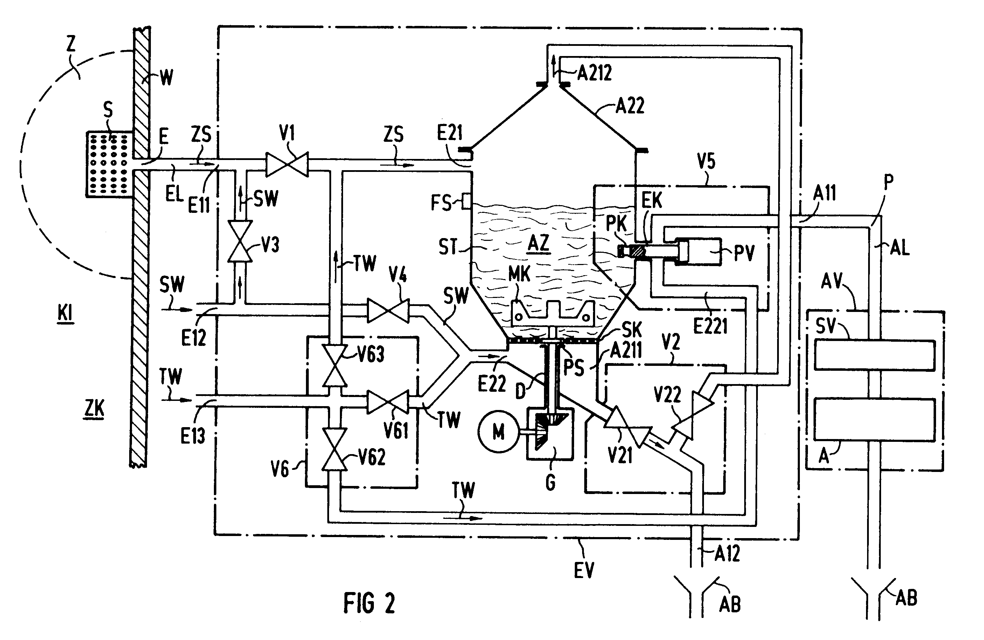

Die erfindungsgemäße Entnahmevorrichtung EV steht gemäß der Darstellung in den Figuren 1 und 2 bevorzugt über eine Entnahmeleitung EL mit einer in der Wandung W des Zellstoffkochers ZK befindlichen Entnahmeöffnung E in Verbindung. Hiermit kann ein Zellstoffstrom ZS der Entnahmevorrichtung EV über eine erste Zuführung E11 zugeführt werden. Gemäß einer anderen, nicht dargestellten Ausführungsform ist es auch möglich, die erfindungsgemäße Entnahmevorrichtung EV in Form einer Armatur auszubilden, und diese direkt auf der Außenseite der Wandung W des Zellstoffkochers ZA anzubringen. In einem solchen Fall ist eine separate Entnahmeleitung EL nicht nötig, und die erste Zuführung E11 am Eingang der Entnahmevorrichtung EV fällt direkt mit der Entnahmeöffnung E in der Wandung des Kochers zusammen. Gemäß einer weiteren Ausführungsform ist es entsprechend der Darstellung in den Figuren möglich, die Entnahmeöffnung E auf der Innenseite des Kochers ZK mit einem Rückhaltesieb S zu umgeben. Hiermit ist es möglich, in der Flüssigkeitsmenge im Inneren des Kochers befindliche, noch unaufgeschlossene Grobbestandteile, z.B. Knoten und Äste, zurückzuhalten.

Die erfindungsgemäße Probenentnahmevorrichtung kann mehrere, unterschiedliche Betriebszustände einnehmen, welche desweiteren anhand der Stellungen der Ventile der in den Figuren beispielhaft dargestellten Ausführungsform näher erläutert werden. So dient ein zweiter Betriebszustand zur eigentlichen Entnahme der Probe aus dem Kocherinneren. Hierzu wird erfindungsgemäß ein Zellstoffstrom ZS einem Auffangsieb AS zugeführt. Das Auffangsieb enthält einen bevorzugt im Inneren eines separaten Siebtopfes ST angeordneten Siebkörper SK. Diesem wird der Zellstoffstrom ZS bevorzugt durch ein geöffnetes Probenentnahmeventil V1 über eine Zuführung E21 zugeführt. Während sich die später zu analysierenden Feststoffbestandteile zunächst im Inneren des Siebkörpers SK absetzen, wird die insbesondere aus Wasser und Aufschlußchemikalien bestehende Trägerflüssigkeit über eine am Siebtopf befindliche Abführung A21, bevorzugt ein weiteres Ablaßventil V2, zu einer Abführung A12 der Entnahmevorrichtung EV und von dort in einen Abfluß AB geleitet. Im zweiten Betriebszustand sind somit bei den in den Figuren beispielhaft dargestellten Vorrichtungen die Ventile V1 und V2 geöffnet, während alle übrigen Ventile V3 bis V6 geschlossen sind.

Die erfindungsgemäße diskontinuierliche Probenentnahme über das als Puffer dienende Auffangsieb AS hat den Vorteil, daß zum einen der Überdruck des aus dem Kocherinneren KI entnommenen Zellstoffstromes ZS im Inneren des Auffangsiebes gefahrlos abgebaut werden kann. Zum anderen kann durch zusätzliche, insbesondere das Auffangsieb umfassende, und in FIG 1 nicht dargestellte Kühleinrichtungen die Temperatur des im Inneren des Siebkörpers SK zurückgehaltenen Zellstoffes ausreichend abgesenkt werden. Die erfindungsgemäße Vorrichtung hat somit zum einen den Vorteil, daß eine "entspannte" Zellstoffprobe gewonnen werden kann, d.h. eine im Vergleich zu den Bedingungen im Inneren des Kochers sowohl in Bezug auf Druck als auch Temperatur nahezu auf Umgebungsbedingungen reduzierte Probenmenge.

Erfindungsgemäß sind desweiteren Entnahmemittel vorgesehen, womit in einem dritten Betriebszustand "Abziehen" die entspannte Zellstoffprobe vom Auffangsieb abgefördert werden kann. Bei einer ersten Ausführung der Entnahmemittel kann dabei die Probe direkt und manuell entnommen werden kann. Bei den in den Figuren dargestellten Ausführungsformen ist hierzu beispielhaft ein zu öffnender und wiederverschließbarer Deckel A22 z.B. am Boden bzw. oberhalb des Auffangsiebes AS im Kopfbereich dargestellt. Durch Öffnen des Deckels kann z.B. der gesamte Siebkörper SK direkt aus dem Siebtopf ST entnommen und der darin befindliche Zellstoff zu Analyseeinrichtungen transportiert werden.

Erfindungsgemäß enthält die Entnahmevorrichtung EV eine zweite Zuführung für ein Spülmittel, mit deren Hilfe in einem ersten Betriebszustand das Spülmittel zur Spülung und Vermischung in den Zellstoffkocher zurückgedrückt werden kann. In den beiden Ausführungsbeispielen der Figuren dient die zweite Zuführung E12 zur Zuführung von Spülmittel SW, wozu sich besonders heißes Wasser bzw. Dampf eignet. Dieses Spülmittel wird im ersten Betriebsstand der Entnahmevorrichtung bevorzugt stoßartig über die erste Zuführung E11, bevorzugt zumindest ein weiteres, dazwischenbefindliches Spülventil V3 und entgegen der eigentlichen Strömungsrichtung des Zellstoffstromes ZS durch die Entnahmeöffnung E hindurch in das Innere KI des Zellstoffkochers ZK gedrückt. Zur Erzeugung von Spülmittelstößen kann das Spülventil V3 pulsartig geöffnet und geschlossen werden.

Mit einer derartigen Spülvorrichtung sind eine Vielzahl von Vorteilen verbunden. Hiermit kann zum einen unmittelbar vor einer Probeentnahme die Verbindung zwischen der Entnahmevorrichtung EV und der Entnahmeöffnung E in der Wandung W des Zellstoffkochers ZK freigespült werden. Diese Zuführung zur Entnahmevorrichtung neigt nach der Beschickung des Kochers und dem Beginn der Kochung zum Verstopfen. Ohne die erfindungsgemäße zweite Zuführung E12 für ein Spülmittel SW besteht bei Auftreten einer derartigen Verstopfung unter Umständen die Gefahr, daß die gesamte Probenentnahmevorrichtung bis zum Ende der Kochung der momentan im Kesselinneren befindlichen Charge und deren Entleerung völlig betriebsunfähig ist. Die Probeentnahmevorrichtung würde somit nicht zum eigentlichen Zweck der exakten Bestimmung des Kochendzeitpunktes zur Verfügung stehen. Mit Hilfe der erfindungsgemäßen Spülmittelzuführung können dagegen alle zur Verstopfung neigenden Rohrleitungen im Inneren der Entnahmevorrichtung, bzw. zwischen Entnahmevorrichtung und Zellstoffkocher, jederzeit freigespült und die Entnahmevorrichtung in Betrieb genommen werden.

Ein weiterer, wesentlicher Vorteil der in dem ersten Betriebszustand möglichen Zuführung von Spülmittel in die Entnahmeöffnung E des Zellstoffkochers ZK besteht darin, hiermit die Entnahme einer "repräsentativen Probe" vorzubereiten. Wird hierzu das Spülmittel bevorzugt stoßartig über die Entnahmeöffnung E in das Kesselinnere KI zurückgedrückt, so wird eine Vermischung und Verwirbelung der sich im Kesselinneren um die Entnahmeöffnung E herum befindlichen Feststoffbestandteile erreicht. Es findet somit eine Homogenisierung der Hackschnitzel in einer um die Entnahmeöffnung E befindlichen sogenannten Probenentnahmezone Z statt. In den Figuren ist eine derartige Probenentnahmezone beispielhaft in Form eines strichlierten Halbkreises dargestellt. Mit Hilfe einer derartigen Spülung während des ersten Betriebszustandes wird sichergestellt, daß bei einer nachfolgenden Probenentnahme im zweiten Betriebszustand kein schlecht aufgeschlossener Zellstoff unmittelbar von der Innenseite der Wandung W um die Entnahmeöffnung E abgezogen wird. Vielmehr führt die Verwirbelung während der bevorzugt stoßartigen Zuführung des Spülmittels zu einer ausreichenden Heranförderung von Zellstoff aus dem Inneren des Kochers. Es ist somit besonders vorteilhaft möglich, mit Hilfe der erfindungsgemäßen Zuführung eines Spülmittels im ersten Betriebszustand die eigentliche Entnahme einer repräsentativen Probe im zweiten Betriebszustand so vorzubereiten, daß bis auf die unmittelbar benötigte Probenmenge nahezu keinerlei zusätzlichen Verluste an Chargenvolumen auftreten.

Erfindungsgemäß kann das Spülmittel über die zweite Zuführung bevorzugt stoßartig entweder direkt über die erste Zuführung oder indirekt über das Auffangsieb und die erste Zuführung in den Zellstoffkocher zurückgedrückt werden. Dies wird desweiteren anhand der in den Figuren dargestellten Ausführungsformen der erfindungsgemäßen Entnahmevorrichtung näher erläutert. So ist ein erstes Spülventil V3 vorgesehen, welches unter Umgehung des Auffangsiebes AS eine direkte Verbindung zwischen der zweiten Zuführung E12 für das Spülmittel SW und der ersten Zuführung E11 bzw. der Entnahmeöffnung E in der Kocherwandung W ermöglicht. Bei Öffnung des Spülmittelventiles V3 können bei geschlossener Stellung aller übrigen Ventile der Entnahmevorrichtung besonders vorteilhafte Spülmittelstöße insbesondere dann direkt in den Zellstoffkocher gedrückt werden, wenn keine Verstopfung der Entnahmevorrichtung befürchtet werden muß und lediglich eine ausreichende Verwirbelung der Hackschnitzelmenge in der Probenentnahmezone Z gewünscht wird. Hierzu wird das bevorzugt auf dem gleichen Temperaturniveau wie die Zellstoffmasse im Kocherinneren befindliche Spülmittel SW mit einem oberhalb des Kesselinnendruckes liegenden Vordruck der zweiten Zuführung E12 zugeführt. Mit Hilfe eines weiteren, zweiten Spülventils V4 ist es desweiteren besonders vorteilhaft möglich, das Auffangsieb AS selbst in den Spülvorgang mit einzubeziehen. In diesem Falls sind in dem in der Figur dargestellten Beispiel die Ventile V2, V3, V5 und V6 geschlossen, während die Ventile V1 und V4 sich im geöffneten Zustand befinden. Das Spülmittel wird somit über die Zuführung E22 in das Auffangsieb AS geleitet und gelangt über dessen Zuführung E21 und das Probenentnahmeventil V1 entgegen der eigentlichen Strömungsrichtung ZS des Zellstoffstromes bei einer Probenentnahme in das Innere des KI des Kochers.

Schließlich ist es in einem weiteren, sechsten Betriebszustand noch möglich, ausschließlich das Aufangsieb AS einer Reinigung zu unterziehen. Dabei wird nicht mehr benötigter Zellstoff aus dem Auffangsieb ausgespült und die erfindungsgemäße Vorrichtung somit zur erneuten Entnahme frischen Zellstoffes aus dem Kocher vorbereitet. In diesem Fall sind das zweite Spülventil V4 und das Ablaßventil V2 geöffnet, während alle übrigen Ventile geschlossen sind.

Gemäß den bisher dargestellten Ausführungsformen kann die bevorzugt im Siebkörper SK des Auffangsiebes AS abgesetzte Zellstoffprobe nur mechanisch aus der Entnahmevorrichtung EV entnommen werden. Weitere Ausführungsformen der Erfindung ermöglichen nun eine automatische Entnahme aus dem Auffangsieb AS. Diese sollen desweiteren unter Zuhilfenahme der in den Figuren ebenfalls bereits dargestellten bevorzugten Ausführungsformen näher erläutert werden.

Hierzu kann eine dritte Zuführung E13 für ein Transportmittel TW vorgesehen sein. Als Transportmittel eignet sich bevorzugt Wasser. Dieses wird in dem dritten, "Abziehen" genannten Betriebszustand der Entnahmevorrichtung dem Auffangsieb bevorzugt stoßweise zugeführt. Der darin abgesetzte Zellstoff wird somit herausgespült und ist über eine Abführung am Ausgang der Entnahmevorrichtung zugänglich.

Im Beispiel der Figuren wird das Transportmittel TW über die dritte Zuführung E13 und ein sich anschließendes Transportventil V6 im dritten Betriebszustand dem Auffangsieb AS ebenfalls über die Zuführung E22 insbesondere im Gegenstromprinzip zugeführt. In diesem Betriebszustand sind das Probenentnahmeventil V1, das Ablaßventil V2 und das Spülventil V4 geschlossen. Die Zellstoffprobe wird somit durch das Transportmittel TW aus dem Auffangsieb AS herausgespült und steht insbesondere nach Durchquerung eines weiteren Probenabführventils V5 an einer Abführung A11 am Ausgang der Entnahmevorrichtung EV zur Verfügung. Die Probe kann auf diese Weise besonders vorteilhaft ohne irgendwelche mechanischen Eingriffe an der Abführung A11 entnommen werden. Im einfachsten Fall wird die Probe über die Abführung A11 in einen Behälter gespült, womit ein weiterer Transport zu Analysevorrichtungen zur Bestimmung der Zellstoffqualität möglich ist.

Der Vorteil der Zuführung eines separaten Transportmittels TW in einem dritten Betriebszustand besteht zum einen darin, daß zur Probenentnahme keinerlei mechanische Handhabungen an der Entnahmevorrichtung notwendig sind. Es ist somit nicht unbedingt notwendig, insbesondere das Auffangsieb der Entnahmevorrichtung mit einem verschließbaren Deckel A22 zu versehen. Vielmehr kann die gesamte Entnahmevorrichtung einschießlich des Auffangsiebes als kompakter, nicht zu öffnender Baukörper beispielsweise in Form einer Armatur ausgeführt werden. Hierdurch wird die Betriebssicherheit der erfindungsgemäßen Vorrichtung insbesondere im Moment der Probenentnahme aus dem Inneren des Kochers ZK wesentlich erhöht. Es besteht somit nicht die Gefahr, daß bei der Zuführung des sehr heißen und unter großem Vordruck stehenden Zellstoffstromes ZS zur Entnahmevorrichtung EV versehentlich Entnahmemittel bzw. der Deckel A22 nicht verschlossen sind.

Die Zuführung des Transportmittels TW über die dritte Zuführung E13 hat desweiteren den Vorteil, daß das Transportmittel TW zugleich als ein Kühlmittel dienen kann. Während im Vergleich dazu das Spülmittel SW möglichst die gleiche Temperatur wie die Zellstoffmasse im Kocherinneren und einen demgegenüber höheren Vordruck aufweisen sollte, kann als Transportmittel im einfachsten Fall Wasser mit Umgebungstemperatur und vergleichbar geringem Vordruck dienen. Neben der abkühlenden Wirkung des Transportmittels kann hiermit gegebenenfalls auch eine Verdünnung bzw. Herausspülung der unter Umständen aggressiven Aufschlußchemikalien aus dem Inneren der Probe ermöglicht werden. So kann in den Beispielen der Figuren das Transportmittel TW bei geöffneten Ventilen V5, V6 im dritten Betriebszustand "Abziehen" zur Kühlung und zur Herausspülung des Zellstoffes aus dem Auffangsieb AS nach der Probenentnahme im zweiten Betriebszustand direkt zugeführt werden.

Gemäß einer weiteren Ausführungsform ist es vor Ausführung dieses Schrittes möglich, d.h. vor Einleitung des dritten Betriebszustandes "Abziehen", bei geöffneten Ventilen V6, V2 und geschlossenen Ventilen V1, V3, V4, V5 eine Vorkühlung und Vorspülung des im Auffangsieb AS befindlichen Zellstoffes in einem zusätzlich eingeschobenen, vierten Betriebszustand "Waschen" durchzuführen.

Die bisher beschriebenen Betriebszustände der Vorrichtung lassen sich vorab wie folgt zusammenfassen:

Ein erster Betriebszustand "Spülen" dient zur Vorbereitung der Entnahme einer "repräsentativen" Probe. Hierzu wird ein Spülmittel SW über die Entnahmeöffnung in das Kocherinnere zurückgedrückt, so daß eine Durchmischung des Zellstoffes in der Probenentnahmezone erreicht wird. In dem folgenden, zweiten Betriebszustand "Probenentnahme" wird ein Zellstoffstrom ZS aus der vorbereiteten Probenentnahmezone abgezogen und in ein Auffangsieb geleitet. Diese Maßnahme dient zur Erzeugung einer "entspannten" Zellstoffprobe, wobei zumindest der hohe Überdruck in dem aus dem Kocherinneren entnommenen Zellstoffstrom abgebaut wird. Zur weiteren Entspannung der Probe kann in einem vierten Betriebszustand "Waschen" der im Auffangsieb zurückgehaltene Zellstoff insbesondere durch Zuführen von Wasser als Transportmittel TW abgekühlt und gewaschen werden. Hierdurch werden die u.U. aggressiven Aufschlußchemikalien aus dem Zellstoff herausgespült. Es kann sich nun der dritte Betriebszustand "Abziehen" anschließen, in dem die vollständig entspannte Zellstoffprobe vom Auffangsieb abgezogen und bevorzugt Mitteln zur automatischen Zellstoffanalyse zugeführt wird. Schließlich kann sich hieran ein sechster Betriebszustand "Reinigen" anschließen, bei dem das Auffangsieb von nicht mehr benötigem Zellstoff befreit wird. Die erfindungsgemäße Vorrichtung ist nun in der Lage, erneut eine repräsentative und entspannte Zellstoffprobe aus dem Kocher zu gewinnen.

An Hand der FIG 2 wird desweiteren eine weitere, besonders vorteilhafte Ausführungsform der erfindungsgemäßen Vorrichtung näher erläutet. Diese ermöglicht neben den oben beschriebenen Betriebszuständen zumindest einen weiteren, fünften Betriebszustand "Aufschlagen". Dieser wird bevorzugt nach Ablauf des vierten Betriebszustandes "Waschen" und vor Beginn des dritten Betriebszustandes "Abziehen" aktiviert. Er dient zum Homogenisieren des im Auffangsieb abgesetzten Zellstoffes. Desweiteren ermöglicht die bevorzugte Ausführungsform von FIG 2 ein zusätzliches Portionieren der Zellstoffprobe im dritten Betriebszustand "Abziehen".

Gemäß der Darstellung von FIG 2 ist hierzu mindestens ein, bevorzugt elektromotorisch angetriebener Mischer zum Aufschlagen und Homogenisieren des im Auffangsieb SG abgesetzten Zellstoffes AZ im fünften Betriebszustand vorgesehen. Dieser enthält im wesentlichen einen Mischkopf MK, welcher im Inneren des Siebtopfes ST in möglichst unmittelbarer Nähe des Auffangsiebes SK und somit des darauf abgesetzten Zellstoffes AZ angeordnet ist. Im Beispiel der FIG 2 ist der bevorzugt aus einem Elektromotor M und einem Getriebe G bestehende Antrieb des Mischers annähernd horizontal unterhalb des Siebtopfes ST angeordnet. Der Mischkopf MK ist dabei über eine durch das Auffangssieb SK geführte Stange D mit dem Getriebe G verbunden. Bevorzugt ist im Durchführungsbereich der Stange eine Prallscheibe PS zur Abdichtung vorgesehen.

Im bevorzugten Ausführungsbeispiel der FIG 2 sind die insbesondere aus dem Probenabführventil V5 und der Abführung A11 bestehenden Entnahmemittel zum Abziehen der entspannten Zellstoffprobe P vom Auffangssieb SK im dritten Betriebszustand um eine Portioniereinrichtung erweitert. Hiermit es ist möglich, im dritten Betriebszustand eine vorbestimmte Teilmenge des entspannten Zellstoffes AZ vom Auffangsieb SK als Zellstoffprobe P abzuziehen.

Im Beispiel der FIG 2 ist das Probenabführventil V5 der Entnahmemittel zusätzlich als Portioniereinrichtung ausgebildet. Das Ventil weist dabei einen Entnahmekolben EK auf, welcher an einem Ende über eine Probenkammer PK mit definiertem, gegebenenfalls einstellbarem Volumen verfügt. Zum Abziehen einer portionierten Probe wird der Entnahmekolben EK zu Füllung der Probenkammer PK in den im Auffangsieb SK abgesetzten Zellstoff AZ eingefahren. Im Beispiel der FIG 2 wird der Entnahmekolben EK über eine zusätzliche Öffnung in der Wand des Siebtopfes ST in den bevorzugt aufgeschlagenen Zellstoff AZ oberhalb des Siebkörpers SK eingefahren. Nach Füllung der Probekammer PK wird der Entnahmenkolben EK wieder ausgefahren, so daß die Entnahmemittel die derart portionierte Zellstoffprobe aus der Probenkammer PK abziehen können. Im Beispiel der FIG 2 weist hierzu das Probenabführventil V5 eine zusätzliche Zuführung E221 auf. Hierüber kann bevorzugt Druckwasser zum Transport des Zellstoffes aus der Probenkammer PK bis zur Abführung A11 am Ausgang der erfindungsgemäßen Entnahmevorrichtung EV eingespeist werden. Im Beispiel der FIG 2 wird hierzu Transportwasser TW zugeführt, welches über das besonders ausgebildete Transportventil V6 von der Zuführung E13 der Entnahmevorrichtung EV abgezweigt wird. Im Beispiel der FIG 2 ist hierzu im Transportventil V6 zusätzlich ein Portionierventil V62 in der zum Eingang E221 des Probenabführventiles V5 führenden Leitung für das Transportwasser TW vorgesehen.

Die Ausführung von FIG 2 weist weitere Vorteile auf. So ist der das Auffangsieb SK enthaltende Siebtopf ST annähernd zylindrisch ausgeführt und senkrecht stehend angeordnet. Im diesem Fall kann der Zellstoffstrom ZS über das Ventil V1 im zweiten Betriebszustand "Probenentnahme" annähernd tangential zur zylindrischen Wandung über die Zuführung E21 bevorzugt in den oberen Bereich des Siebtopfes ST eingeleitet werden. Der Siebtopf ST wirkt wie ein "Zyklon", in dem der hohe Überdruck des aus dem Kocherinneren KI entnommenen Zellstoffstromes ZS durch Entspannen gefahrlos abgebaut wird.

Bevorzugt ist in einem Siebtopf entsprechend der Darstellung von FIG 2 das Auffangsieb SK annähernd horizontal verlaufend im Bodenbereich angeordnet. Dies hat den Vorteil, daß bei einer bevorzugt tangentialen Einleitung des unter hohem Überdruck stehenden Zellstoffstromes ZS über die Zuführung E21 im Deckelbereich des Topfes nicht die Gefahr einer Beschädigung insbesondere des Mischkopfes MK besteht, welcher bevorzugt unmittelbar oberhalb des horizontal verlaufenden Auffangsiebes im Bodenbereich des Topfes angeordnet ist.

Im Beispiel der FIG 2 ist vorteilhaft zudem die Abführung A21 des Siebtopfes ST zweiteilig ausgeführt, und verfügt somit über eine separate Bodenabführung A211 und eine Deckelabführung A212. Hiermit ist es beim Füllen des Siebtopfes ST mit Transportwasser TW möglich, diesen z.B. bis zum Ansprechen eines Füllstandssensors FS in der Wandung des Siebtopfes ST anzufüllen, und anschließend über die Bodenabführung A211 zu entleeren. Zum anderen kann der Siebtopf ST auch vollständig mit Transportwasser gefüllt werden, so daß im diesem Fall überschüssiges Wasser über die als Überlauf dienende Deckelabführung A212 in die Abführung A12 abgeleitet wird. Dementsprechend ist das Ablaßventil V2 im Beispiel der FIG 2 ebenfalls zweiteilig ausgeführt, und weist somit ein Bodenablaßventil V21 in der Bodenabführung A211 und ein Deckelablaßventil V22 in der Deckelabführung A212 auf.

Im Beispiel der FIG 2 ist das Transportventil V6 zur Steuerung der Zuführung des Transportwassers TW vorteilhaft ebenfalls mehrteilig ausgeführt. So dient das bereits beschriebene Portionierventil V62 zur Abzweigung eines Transportwasserstromes für das Probenabführventil V5. Das Teilventil V61 verbindet wiederum die Zuführung E13 der Entnahmevorrichtung EV mit der Zuführung E22 im Bodenbereich des Siebtopfes ST. Schließlich ist ein weiteres Teilventil V63 vorgesehen, womit ein Transportwasserstrom TW über die Zuführung E21 im Deckelbereich in den Siebtopft ST eingeleitet werden kann.

Die insgesamt möglichen Betriebszustände der Entnahmevorrichtung EV von FIG 2 und die dazugehörigen Stellungen der Ventile werden nachfolgend kurz zusammengefaßt dargestellt:

In einem ersten Betriebszustand "Spülen" wird Spülmittel SW von der Zuführung E12 der Entnahmevorrichtung EV in die Entnahmeöffnung E in der Wandung W des Zellstoffkochers ZK zurückgedrückt. Hierzu kann das erste Spülventil V3 geöffnet und alle übrige Ventile geschlossen sein. In einem zweiten Fall sind die Ventile V4, V1 geöffnet und alle übrigen Ventile geschlossen. Dabei wird das Spülmittel SV über die Zuführung E22 zunächst von unten in den Siebtopf ST gedrückt, durchströmt im Gegenstrom den Siebkörper SK und gelangt über die Zuführung E21 entgegen der Strömungsrichtung des Zellstoffstromes ZS und die Entnahmeleitung EL in die Entnahmeöffnung E des Zellstoffkochers ZK. Hierdurch kann insbesondere zu Reinigungszwecken der Siebkörper SK und der Siebtopf ST in den Spülvorgang zur Erzeugung einer repräsentativen Zellstoffprobe in der Probenentnahmezone Z mit einbezogen werden.

In einen zweiten Betriebszustand "Probenentnahme" sind die Ventile V1, V21 geöffnet und alle übrigen Ventile geschlossen. In diesem Fall wird ein unter hohem Innendruck stehender, stark erhitzter Zellstoffstrom ZS von der Entnahmeöffnung E des Zellstoffkochers ZK über die Entnahmeleitung EL bevorzugt tangential in den oberen Bereich des bevorzugt zylindrisch ausgebildenten, stehenden Siebtopf ST eingeleitet. Die festen Zellstoffbestandteile setzen sich dabei im Siebkörper SK ab, während die Kocherchemikalien über die Abführung A211 und das Bodenablaßventil V21 ablaufen. Gegebenenfalls kann bereits in diesem Betriebszustand der Mischer aktiviert werden, so daß der Mischkopf MK den sich absetzenden Zellstoff beginnt zu homogenisieren.

In einem vierten Betriebszustand "Waschen" wird Transportwasser TW zum Abkühlen des im Siebkörper SK abgesetzten Zellstoffes und zum Herauswaschen der Aufschlußchemikalien eingeleitet. Hierzu kann das Ventil V61 geöffnet und alle übrigen Ventile geschlossen sein. Das Transportwasser TW wird somit über die Zuführung E22 bis zum Ansprechen des Füllstandssensors FS bzw. bis zum Überlaufen durch die Abführung A212 im Gegenstrom von unten in den Siebtopf ST eingeleitet. Zu Verbesserung des Waschwirkung ist in diesem Fall der Mischer in Betrieb. Alternativ kann das Transportwasser TW auf über das Ventil V63 und die Zuführung E21 von oben eingefüllt werden. Nach Beendigung des Waschvorganges wird der Mischer abgeschaltet und die Flüssigkeit aus dem Siebtopf durch Öffnung des Ventils V21 über die Abführungen A211, A12 in den Abfluß AB abgeleitet.

In einem fünften Betriebszustand "Aufschlagen" wird der Siebtopf ST zunächst in der gleichen Weise wie beim Betriebszustand "Waschen" mit Transportwasser TW angefüllt. Danach wird der Mischer in Betrieb gesetzt, so daß der Mischkopf MK homogenisiert ca. 2 bis 5 Minuten die Zellstoffsuspension homogenisiert. Es entseht somit feinverteilter, klumpenfreier Zellstoff AZ. Nach Beendigung des Homogenisierungsvorganges wird auch hier die Flüssigkeit wiederum über die Abführung A211, A12 und das Ventil V21 abgelassen. Besonders vorteilhaft werden der vierte und fünfte Betriebszustand nicht separat, sondern gleichzeitig ausgeführt. So wird der Zellstoff beim Waschen gleichzeitig aufgeschlagen.

In einem dritten Betriebszustand "Abziehen" wird bevorzugt nur eine Teilmenge des Zellstoffes vom Auffangsieb SK abgezogen. Hierbei sind zunächst alle Ventile geschlossen und es wird der Entnahmenkolben EK des Probenabführventils V5 in den abgesetzten Zellstoff AZ eingefahren. Nach Füllung der Probenkammer PK wird der Entnahmenkolben EK ausgefahren und der Zellstoff aus der Probenkammer PK zur Abführung A11 am Ausgang der Entnahmevorrichtung EV geleitet. Für diesen Transportvorgang wird dem Probenabführventil V5 Transportwasser TW über die Zuführung E211 zum Freispülen der Probenkammer PK zugeführt. Zur Freigabe des Transportwassers dient bevorzugt das Ventil V62 im Transportventil V6. Das Ventil V62 kann gegebenenfalls auch entfallen, wenn das Probenabführventil V5 über drei Stellung verfügt und die Zuführung E221 im ausgefahrenen Zustand des Entnahmenkolbens EK selbständig abdichtet.

In einem sechsten Betriebszustand "Reinigen" werden nicht mehr benötigte Zellstoffreste aus dem Siebkörper SK ausgespült. Hierzu wird der Siebtopf ST über die Zuführung E22, die Abführung A211, das Ventil V22 und die Abführung A12 bei geöffnetem Ventil V61 mit Transportwasser TW und/oder bei geöffnetem Ventil V4 mit Spülmittel SW im Gegenstrom durchgespült. Zur Intensivierung des Reinigungsvorganges kann auch in diesem Fall der Mischer im Betrieb gesetzt werden.

Die Auführungsform von FIG 2 hat den besonderen Vorteil, daß an der Abführung A11 der erfindungsgemäßen Entnahmenvorrichtung EV eine repräsentative, entspannte, homogenisierte und portionierte Zellstoffprobe P zur Verfügung steht, welche bevorzugt über eine Abführleitung AL angeschlossenen Mitteln zur automatischen Zellstoffanalyse AV zugeführt werden kann. Das Beispiel in FIG 2 hat insbesondere auf Grund der bevorzugten Ausführung des Probenabführventiles V5 den weiteren Vorteil, daß eine derartig abgezogene und portionierte Zellstoffprobe P über eine relativ lange Abführleitung AL geleitet werden kann. Die Mittel zur automatischen Zellstoffanalyse AV können somit räumlich entfernt vom Zellstoffkocher ZK und der daran befindlichen Entnahmenvorrichtung EV angeordnet sein. Hierdurch ist es möglich, daß die Zellstoffproben P von mehreren, Entnahmenvorrichtungen EV an unterschiedlichen Zellstoffkochern ZK einer einzigen Zellstoffanalysevorrichtung AV zugeführt werden. Diese kann somit besonders wirtschaftlich die Zellstoffproben P von mehreren, parallel arbeitenden Zellstoffkochern ZK verarbeiten.

Die Abflüsse AB an den Ausgängen der Entnahme- und Analysevorrichtungen EV, AV führen bevorzugt zu einem Auffangbehälter. Hiermit ist es möglich, die bei der Zellstoffprobenentnahme anfallenden flüssigen und festen Komponenten in den Prozeß rückzuführen, insbesondere in den Zellstoffkocher ZK.

Gemäß einer weiteren, in den Figuren bereits dargestellten Ausführungsform umfaßt die erfindungsgemäße Vorrichtung desweiteren Mittel AV zur automatischen Zellstoffanalyse, welche sich bevorzugt über eine separate Abführleitung AL unmittelbar an die Abführung A11 anschließen. Diesen Analysemitteln AV wird die entspannte Probe im dritten Betriebszustand "Abziehen" mit Hilfe des Transportmittels TW direkt aus dem Auffangsieb AS über die Abführung A11 zugeführt. Bevorzugt bestehen die Mittel zur automatischen Zellstoffanalyse aus einer Sortiervorrichtung SV, mit der gegebenfalls noch vorhandene, unaufgeschlossene Grobbestandteile, insbesondere Knoten und Äste, aussortiert werden können. An die dienende Sortiervorrichtung SV schließt sich ein eigentliche, bevorzugt rechnergesteuerte on-line-Analysator A an. Dieser bestimmt bevorzugt die als Maß für die Zellstoffqualität dienende sogenannte "Kappazahl". Nach Ausführung der Analyse wird die nun nicht mehr benötigte Zellstoffmenge mit Hilfe einer in den Figuren nicht dargestellten weiteren Spülvorrichtungen aus der Analysevorrichtung AV herausgespült und über einen Abfluß AB abgeleitet.

Gemäß einer letzten, besonders vorteilhaften Ausführungsform der Erfindung ist ein programmgesteuertes Automatisierungssystem, insbesondere eine speicherprogrammierbare Steuerung oder ein Prozeßleitsystem, vorgesehen. Hiermit können die einzelnen Betriebszustände der Entnahmevorrichtung zeitkoordiniert aktiviert und überwacht werden. Für das Ausführungsbeispiel gemäß der Figur hat dies zur Folge, daß das nicht dargestellt, programmgesteuerte Automatisierungssystem über je eine Ausgabeschnittstelle mit jedem der Ventile im Inneren der Entnahmevorrichtung EV und über mindestens eine Ein- und Ausgabeschnittstelle mit der automatischen Zellstoffanalysevorrichtung AV verbunden ist. Hiermit können besonders vorteilhaft mit Hilfe eines Ablaufprogrammes die einzelnen Betriebszustände der Entnahmevorrichtung zeitkoordiniert gesteuert und überwacht werden, und schließlich das von der automatischen Zellstoffanalysevorrichtung AV gewonnene Meßergebnis insbesondere zur Anzeige, Prozeßsteuerung und Weiterverarbeitung in das Automatisierungssystem übernommen werden.

Die erfindungsgemäße Probenentnahmevorrichtung hat somit insbesondere in Verbindung mit automatischen Zellstoffanalysemitteln und einem programmgesteuerten Automatisierungssystem zur Ablaufsteuerung den besonderen Vorteil, daß hiermit eine vollautomatische Steuerung der gesamten Zellstoffkochung im Inneren des Zellstoffkochers möglich wird. Somit können z.B. mit Beginn und gegen Ende der Kochung programmgesteuert auf Veranlassung des Automatisierungssystems eine oder mehrere Proben aus dem Zellstoffkocher entnommen, die jeweils noch benötigte Restkochzeit bestimmt, eingestellt und überwacht werden. Nach Ablauf der ermittelten Restkochzeit kann schließlich die Kochung ebenfalls programmgesteuert im gewünschten Zeitpunkt der Erreichung der optimalen Zellstoffqualität vollautomatisch beendet werden. Die erfindungsgemäße Vorrichtung zur Probenentnahme ist somit ein wichtiges Bauelement für die Automatisierung des technologischen Prozesses der Hochung von Zellstoff insbesondere in diskontinuierlichen, geschlossenen Zellstoffkochern.

Die Erfindung ist nicht nur speziell für Zellstoffkocher geeignet. Vielmehr kann die erfindungsgemäße Entnahmevorrichtung im allgemeinen auch zur Probenentnahme aus einem chemischen Reaktor verwendet werden. Dieser ist mit einer Reaktionsmasse aus mindestens einem flüssigen und mindestens einem festen Reaktionspartner angefüllt. Dabei kann mit Hilfe der erfindungsgemäßen Entnahmevorrichtung eine Probe des mindestens einen festen Reaktionspartners entnommen und gegebenenfalls entsprechenden Analysevorrichtungen zugeführt werden.

Desweiteren kann die Erfindung sowohl bei diskontinuierlichen als auch bei kontinuierlichen Zellstoffkochern angewendet werden. So kann die erfindungsgemäße Entnahmevorrichtung beispeilsweise im unteren Drittel eines stehenden, kontinuierlichen Kochers angebracht werden.

## Patentansprüche

1. Vorrichtung zur Gewinnung einer Zellstoffprobe (P) aus einem Zellstoffkocher (ZK), mit
a) einer ersten Zuführung (E11), welche mit einer Entnahmeöffnung (E) in der Wandung (W) des Zellstoffkochers (ZK) in Verbindung steht,
b) einem Auffangsieb (ST, SK), dem in einem zweiten Betriebszustand ("Probenentnahme") ein Zellstoffstrom (ZS) über die erste Zuführung (E11) aus dem Zellstoffkocher (ZK) zugeführt wird,
c) einer zweiten Zuführung (E12) für ein Spülmittel (SW), insbesondere Wasser oder Dampf, über die in einem ersten Betriebszustand ("Spülen") das Spülmittel (SW) bevorzugt stoßartig entweder direkt über die erste Zuführung (E11) oder indirekt über das Auffangsieb (ST, SK) und die erste Zuführung (E11) in den Zellstoffkocher (ZK) zurückgedrückt wird, und mit
d) Entnahmemitteln (A22; V5, A11), womit in einem dritten Betriebszustand ("Abziehen") die Zellstoffprobe (P) vom Auffangsieb (SK) abgezogen wird.

2. Vorrichtung nach Anspruch 1, **dadurch gekennzeichnet,** daß die Entnahmemittel einen Deckel (A22) enthalten, so daß die Zellstoffprobe (P) im dritten Betriebszustand ("Abziehen") durch manuelle Entnahme insbesondere des gesamten Auffangssiebes (SK) abgezogen werden kann.

3. Vorrichtung nach Anspruch 1, **dadurch** **gekennzeichnet**, daß die Entnahmemittel (A22; V5, A11) eine dritte Zuführung (E13) für ein Transportmittel (TW) enthalten, insbesondere Wasser, über die im dritten Betriebszustand ("Abziehen") das Transportmittel (TW) dem Auffangsieb (AS) bevorzugt stoßweise zugeführt und die darin abgesetzte Zellstoffprobe (P) abgezogen wird.

4. Vorrichtung nach Anspruch 3, **dadurch gekennzeichnet,** daß das Transportmittel (TW) in einem vierten Betriebszustand ("Waschen") zugleich als Kühl- und Spülmittel für den im Aufangsieb (ST, SK) befindlichen Zellstoff (AZ) dient.

5. Vorrichtung nach einem der vorangegangenen Ansprüche, **gekennzeichnet** durch mindestens einen, bevorzugt elektromotorisch angetriebenen Mischer (MK, G, M) zum Aufschlagen und Homogenisieren des im Aufangsieb (SK) abgesetzten Zellstoffes (AZ) in einem fünften Betriebszustand ("Aufschlagen") (FIG 2).

6. Vorrichtung nach einem der vorangegangenen Ansprüche, **dadurch gekennzeichnet,** daß das Auffangsieb (SK) annähernd horizontal verlaufend im Bodenbereich eines Siebtopfes (ST) angeordnet ist (FIG 2).

7. Vorrichtung nach einem der vorangegangenen Ansprüche, **dadurch gekennzeichnet,** daß das Auffangsieb (SK) in einem annähernd zylindrisch ausgeführten Siebkopf (ST) enthalten ist, und der Zellstoffstrom (ZS) im ersten Betriebszustand ("Probenentnahme") annähernd tangential zur Wandung bevorzugt in den oberen Bereich des Siebtopfes (ST) eingeleitet wird (E21).

8. Vorrichtung nach Anspruch 5 und 6, **dadurch** **gekennzeichnet**, daß der Mischer (MK, G, M) einen schaufelförmigen Mischkopf (MK) aufweist, der im Bereich unmittelbar oberhalb des Auffangsiebes (SK) im Siebtopf (ST) angeordnet ist.

9. Vorrichtung nach Anspruch 8, **dadurch gekennzeichnet,** daß der bevorzugt elektromotorische Antrieb (G, M) des Mischers annähernd horizontal unterhalb des Siebtopfes (ST) angeordnet ist und der Mischkopf (MK) über eine durch das Auffangsieb (SK) hindurchgeführte Stange mit dem Antrieb (G, M) verbunden ist (FIG 2).

10. Vorrichtung nach einem der vorangegangenen Ansprüche, **dadurch gekennzeichnet,** daß die Entnahmemittel (A22; V5, A11) eine Portioniereinrichtung (V5, PV; EK, PK, E221) enthalten, womit im dritten Betriebszustand ("Abziehen") eine vorbestimmte Teilmenge des entspannten Zellstoffes (AZ) vom Auffangsieb (SK) als Zellstoffprobe (P) abgezogen wird.

11. Vorrichtung nach Anspruch 10, **dadurch gekennzeichnet,** daß die Portioniereinrichtung (V5, PV) einen Entnahmekolben (EK) mit einer Probenkammer (PK) an einem Ende aufweist, der Entnahmekolben (EK) zur Füllung der Probenkammer (PK) in den im Auffangsieb (SK) abgesetzten Zellstoff (AZ) eingefahren wird, und nach Ausfahren die Entnahmemittel (V5, A11) die portionierte Zellstoffprobe (P) aus der Probenkammer (PK) abziehen (FIG 2).

12. Vorrichtung nach einem der vorangegangenen Ansprüche **gekennzeichnet** durch Mittel zur automatischen Zellstoffanalyse (AV), insbesondere aus einer Sortiervorrichtung (SV) mit einem angeschlossen, bevorzugt rechnergesteuerten Analysator (A), denen die Zellstoffprobe (P) über die Entnahmemittel (V5, A11) zugeführt wird.

13. Vorrichtung nach einem der vorangegangenen Ansprüche, **gekennzeichnet** durch ein programmgesteuertes Automatisierungssystem, insbesondere eine speicherprogrammierbare Steuerung oder ein Prozeßleitsystem, welches die einzelnen Betriebszustände zeitkoordiniert aktiviert, ausführt und überwacht.

## Claims

1. Apparatus for obtaining a cellulosic sample (P) from a digester (ZK), having
a) a first supply line (E11) which is connected to an extraction opening (E) in the wall (W) of the digester (ZK),
b) a collecting filter (ST, SK), to which there is supplied in a second operational state ("sample extraction") a flow of cellulose (ZS) by way of the first supply line (E11) from the digester (ZK),
c) a second supply line (E12) for a rinsing medium (SW), in particular water or steam, by way of which, in a first operational state ("rinsing"), the rinsing medium (SW) is pushed back preferably intermittently either directly by way of the first supply line (E11) or indirectly by way of the collecting filter (ST, SK) and the first supply line (E11) into the digester (ZK), and having
d) extraction means (A22; V5, A11), with which, in a third operational state ("drawing-off"), the cellulosic sample (P) is drawn off from the collecting filter (SK).

2. Apparatus according to claim 1, characterized in that the extraction means contain a cover (A22) so that the cellulosic sample (P) in the third operational state ("drawing-off") can be drawn off by manual extraction, in particular of the entire collecting filter (SK).

3. Apparatus according to claim 1, characterized in that the extraction means (A22; V5, A11) contain a third supply line (E13) for a transport medium (TW), in particular water, by way of which, in the third operational state ("drawing-off"), the transport medium (TW) is supplied to the collecting filter (AS) preferably spasmodically and the cellulosic sample (P) deposited therein is drawn off.

4. Apparatus according to claim 3, characterized in that the transport medium (TW) serves in a fourth operational state ("washing") simultaneously as cooling medium and rinsing medium for the cellulose (AZ) located in the collecting filter (ST, SK).

5. Apparatus according to one of the preceding claims, characterized by at least one mixer (MK, G, M), preferably driven by an electric motor, for impacting and homogenizing the cellulose (AZ) deposited in the collecting filter (SK) in a fifth operational state ("impacting") (Figure 2).

6. Apparatus according to one of the preceding claims, characterized in that the collecting filter (SK) is arranged so that it extends approximately horizontally in the floor region of a filter vessel (ST) (Figure 2).

7. Apparatus according to one of the preceding claims, characterized in that the collecting filter (SK) is contained in a filter head (ST) which is designed to be approximately cylindrical, and the flow of cellulose (ZS) in the first operational state ("sample extraction") is introduced approximately tangentially to the wall preferably into the upper region of the filter vessel (ST) (E21).

8. Apparatus according to claim 5 and 6, characterized in that the mixer (MK, G, M) has a vane-shaped mixing head (MK) which is arranged in the region directly above the collecting filter (SK) in the filter vessel (ST).

9. Apparatus according to claim 8, characterized in that the, preferably electric-motor, drive (G, M) of the mixer is arranged approximately horizontally underneath the filter vessel (ST) and the mixing head (MK) is connected to the drive (G, M) by way of a rod guided through the collecting filter (SK) (Figure 2).

10. Apparatus according to one of the preceding claims, characterized in that the extraction means (A22; V5, A11) contain a portioning device (V5, PV; EK, PK, E221), with which, in the third operational state ("drawing-off"), a predetermined partial quantity of the slackened cellulose (AZ) is drawn off from the collecting filter (SK) as cellulosic sample (P).

11. Apparatus according to claim 10, characterized in that the portioning device (V5, PV) has an extraction piston (EK) with a sample chamber (PK) at one end, the extraction piston (EK) is moved into the cellulose (AZ) deposited in the collecting filter (SK) for filling the sample chamber (PK), and after removal, the extraction means (V5, A11) draw the portioned cellulosic sample (P) off from the sample chamber (PK) (Figure 2).

12. Apparatus according to one of the preceding claims, characterized by means for automatic cellulosic analysis (AV), in particular from a sorting device (SV) with a connected, preferably computer-controlled, analyzer (A), to which the cellulosic sample (P) is supplied by way of the extraction means (V5, A11).

13. Apparatus according to one of the preceding claims, characterized by a programme-controlled automation system, in particular a memory-programmable control or a process control system which activates, carries out and monitors the individual operational states in a time-coordinated manner.

## Revendications

1. Dispositif d'obtention d'un échantillon (P) de pâte cellulosique d'un lessiveur (ZK) de pâte, comprenant
a) une première entrée (E11), qui communique avec un orifice (E) de prélèvement ménagé dans la paroi (W) du lessiveur (ZK) de pâte,
b) un tamis (ST, SK) de captage, auquel est envoyé, dans un deuxième état de fonctionnement ("prélèvement d'échantillon"), un courant "ZS" de pâte provenant du lessiveur (ZK) de pâte par l'intermédiaire de la première entrée (E11),
c) une deuxième entrée (E12) pour un agent (SW) de rinçage, notamment de l'eau ou de la vapeur, par laquelle, dans un premier état de fonctionnement ("rinçage"), l'agent (SW) de rinçage est refoulé, de préference par à-coups, directement par la première entrée (E11) ou indirectement par le tamis (ST, SK) de captage et par la première entrée (E11) dans le lessiveur (ZK) de pâte, et
d) des moyens (A22; V5, A11) de prélèvement, l'échantillon (P) de pâte étant retiré du tamis (SK) de captage dans un troisième etat de fonctionnement ("retrait").

2. Dispositif suivant la revendication 1, caractérisé en ce que les moyens de prélèvement comportent un couvercle (A22), de manière à pouvoir retirer l'échantillon (P) de pâte au troisième état de fonctionnement ("retrait") en enlevant manuellement notamment tout le tamis (SK) de captage.

3. Dispositif suivant la revendication 1, caracterisé en ce que les moyens (A22; V5, A11) de prélèvement comportent une troisième entrée (E13) pour un agent de transport, notamment de l'eau, par lequel au troisième état de fonctionnement ("retrait"), l'agent (TW) de transport est envoyé, de préférence par à-coups, au tamis (AS) de captage et l'échantillon (P) de pâte, qui y est déposé, est retiré.

4. Dispositif suivant la revendication 3, caractérisé en ce que l'agent (TW) de transport sert, dans un quatrième état de fonctionnement ("lavage") en même temps d'agent de refroidissement et de rinçage pour la pâte (AZ) se trouvant dans le tamis (ST,SK) de captage.

5. Dispositif suivant l'une des revendications précédentes, caractérisé par au moins un mélangeur (MK, G, M) entraîné de préférence par un moteur électrique et destiné à battre et à homogénéiser la pâte (AZ) déposée dans le tamis (SK) de captage dans un cinquième état de fonctionnement ("battage") (figure 2).

6. Dispositif suivant l'une des revendications précédentes, caractérisé en ce que le tamis (SK) de captage est disposé en s'étendant d'une manière sensiblement horizantale au fond d'un pot (ST) de tamisage.

7. Dispositif suivant l'une des revendications précédentes, caractérisé en ce que le tamis (SK) de captage est contenu dans un pot (ST) de tamisage sensiblement cylindrique et le courant (ZS) de pâte est introduit (E21) au premier état de fonctionnement ("prélèvement d'échantillon") à peu près tangentiellement à la paroi, de préférence dans la partie supérieure du pot (ST) de tamisage.

8. Dispositif suivant la revendication 5 ou 6, caractérisé en ce que le mélangeur (MK, G, M) comporte une tête (MK) de mélange en forme d'aube et disposée juste en-dessous du tamis (SK) de captage dans le pot (ST) de tamisage.

9. Dispositif suivant la revendication 8, caractérisé en ce que l'entraînement (G, M), de préférence par un moteur électrique, du mélangeur est disposé sensiblement horizontalement en-dessous du pot (ST) de tamisage, et la tête (MK) de mélange est reliée à l'entraînement (GM) par une barre passant à travers le tamis (SK) de captage.

10. Dispositif suivant l'une des revendications précédentes, caractérisé en ce que les moyens de prélèvement (A22; V5, A11) comportent un dispositif (V5 , PV; EK, PK, E221) de mise sous forme de portion, grâce auquel, dans le troisième état de fonctionnement ("retrait"), une quantité prescrite de la pâte (AZ) détendue est retirée du tamis (SK) de captage sous forme d'échantillon (P) de pâte.

11. Dispositif suivant la revendication 10, caractérisé en ce que le dispositif (V5, PV) de mise sous forme de portion comporte un piston (EK) de prélèvement ayant une chambre (PK) à échantillon à l'une des extrémités, le piston (EK) de prélèvement est introduit pour emplir la chambre (PK) à échantillon dans la pâte (AZ) déposée dans le tamis (SK) de captage et, après sortie des moyens (V5, A11) de prélèvement, l'échantillon (P) de pâte sous forme de portion est retiré de la chambre (PK) à échantillon (figure 2).

12. Dispositif suivant l'une des revendications précédentes, caractérisé par des moyens (AV) d'analyse automatique de la pâte, notamment constitués d'un dispositif (SV) de triage auquel est relié un analyseur (A) qui, de préférence, est commandé par ordinateur et auquel l'échantillon (P) de pâte est envoyé par les moyens (V5, A11) de prélèvement.

13. Dispositif suivant l'une des revendications précédentes, caractérisé par un système d'automatisation programmé, notamment une commande programmable dans une mémoire ou un système de conduite de procédé, qui coordonne dans le temps, met en action, effectue et surveille les divers états de fonctionnement.
